(19) Europäisches Patentamt
European Patent Office
Office européen des brevets

(11) **EP 3 040 121 A1**

(12) **EUROPEAN PATENT APPLICATION**
published in accordance with Art. 153(4) EPC

(43) Date of publication:
06.07.2016 Bulletin 2016/27

(51) Int Cl.:
*B01J 23/44* (2006.01)   *B01J 35/02* (2006.01)
*B01J 37/02* (2006.01)   *H01M 4/86* (2006.01)
*H01M 4/88* (2006.01)   *H01M 4/92* (2006.01)
*H01M 8/10* (2006.01)

(21) Application number: 14840872.7

(22) Date of filing: 07.07.2014

(86) International application number:
PCT/JP2014/068057

(87) International publication number:
WO 2015/029602 (05.03.2015 Gazette 2015/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 30.08.2013 JP 2013179709

(71) Applicant: TOYOTA JIDOSHA KABUSHIKI
KAISHA
Toyota-shi, Aichi 471-8571 (JP)

(72) Inventor: NANBA, Ryoichi
Toyota-shi
Aichi 471-8571 (JP)

(74) Representative: Jackson, Martin Peter
J A Kemp
14 South Square
Gray's Inn
London WC1R 5JJ (GB)

(54) **CORE-SHELL CATALYST AND PRODUCTION METHOD FOR CORE-SHELL CATALYST**

(57) The present invention is to provide core-shell catalysts which are configured to be able to increase the performance of a unit cell of a fuel cell, and a method for producing the core-shell catalysts. Disclosed are core-shell catalysts and method for producing the same, the core-shell catalysts comprising a core containing palladium and a shell containing platinum and covering the core, wherein, in a number-based particle size frequency distribution, an average particle size is 4.70 nm or less; a standard deviation is 2.00 nm or less; and a frequency of a particle size of 5.00 nm or less is 55% or more.

Fig. 1

**Description**

Technical Field

The present invention relates to core-shell catalysts and a method for producing the same.

Background Art

A fuel cell converts chemical energy directly into electric energy by supplying a fuel and an oxidant to two electrically-connected electrodes each and electrochemically oxidizing the fuel. Accordingly, a fuel cell is not limited by the Carnot cycle; therefore, it shows high energy conversion efficiency. A fuel cell is generally constituted of a stack of single cells, each of which has a membrane electrode assembly (MEA) as the basic structure, in which an electrolyte membrane is sandwiched between a pair of electrodes.

Conventionally, platinum and platinum alloy catalysts with high catalytic activity have been used as electrode catalysts for fuel cells. However, platinum has such a problem that it is expensive and limited in resources. Accordingly, there is a demand for a reduction in platinum use.

On the other hand, although catalysts using platinum are very expensive, catalytic reaction occurs only on the particle surface and the inside is rarely involved in catalytic reaction. Accordingly, relative to the material cost, the catalytic activity of the catalysts using platinum is not high.

To the above problems, techniques such as platinum core-shell catalysts in which a platinum layer (shell) is coated on a particle made of a different metal (core metal), a reduction of platinum particle size, etc., have attracted attention (for example, Patent Literatures 1 to 4). For a core-shell particle, the cost of the inside of the particle, which is rarely involved in catalytic reaction, can be reduced by using a relatively inexpensive material as a core metal material.

For example, core-shell catalysts in which a particle containing palladium is used as the core and is covered with a shell containing platinum, are disclosed in Patent Literature 1.

Citation List

Patent Literature 1: U.S. Patent No. 7,691,780
Patent Literature 2: Japanese Patent Application Laid-Open (JP-A) No. 2012-041581
Patent Literature 3: JP-A No. 2011-072981
Patent Literature 4: JP-A No. 2005-515063

Summary of Invention

Technical Problem

In Patent Literature 1, the particle size of the core-shell catalysts and the number of layers constituting the shell are described. However, as a result of research, the inventor of the present invention has found that core-shell catalysts configured to exhibit high battery performance when used to constitute a unit cell of a fuel cell, cannot be sufficiently specified only by the indicators described in Patent Literature 1.

The present invention was achieved in light of the above circumstances. An object of the present invention is to provide core-shell catalysts which are configured to be able to increase the performance of a unit cell of a fuel cell, and a method for producing the core-shell catalysts.

Solution to Problem

The core-shell catalysts of the present invention are core-shell catalysts comprising a core containing palladium and a shell containing platinum and covering the core, wherein, in a number-based particle size frequency distribution, an average particle size is 4.70 nm or less; a standard deviation is 2.00 nm or less; and a frequency of a particle size of 5.00 nm or less is 55% or more.

According to the present invention, the power generation performance of a unit cell of a fuel cell can be increased.

For the core-shell catalysts of the present invention, the frequency is preferably 71% or more.

For the core-shell catalysts of the present invention, the average particle size is preferably 4.40 nm or less.

For the core-shell catalysts of the present invention, the standard deviation is preferably 1.60 nm or less.

According to the present invention, the core-shell catalysts wherein an average thickness of the shells is 0.20 to 0.35 nm, can be provided.

The core-shell catalyst production method of the present invention is a method for producing the core-shell catalysts of the present invention, wherein a platinum-containing shell is deposited on a surface of a palladium-containing particle in which, in a number-based particle size frequency distribution, an average particle size is 4.40 nm or less; a standard deviation is 2.00 nm or less; and a frequency of a particle size of 5.00 nm or less is 65% or more.

According to the core-shell catalyst production method of the present invention, the core-shell catalysts wherein an average thickness of the platinum-containing shells is 0.20 to 0.35 nm, can be produced.

Advantageous Effects of Invention

The core-shell catalysts of the present invention can increase the performance of a fuel cell.

Brief Description of Drawings

Fig. 1 is a view showing a relationship between the particle size of core-shell catalysts and a Pt/Pd ratio (atom ratio) measured by TEM-EDS.

Fig. 2 is a view of a mechanism that a large-size Pd-containing particle (Pd-containing core) is not easily covered with a shell (Pt-containing shell).

Fig. 3 is a view showing the particle size distribution of Pd particles used in Example 1 and that of core-shell catalysts of Example 1.

Fig. 4 is a view showing a relationship between current density and cell voltage in Examples 1 to 7 and Comparative Examples 1 to 3.

Fig. 5 is a view showing a relationship between frequency (%) of a particle size of 5.00 nm or less and cell voltage (@ 2.6 A/cm$^2$) (V) in Examples 1 to 7 and Comparative Examples 1 to 3.

Fig. 6 is a view showing a relationship between frequency (%) of a particle size of 5.00 nm or less and cell voltage (@ 0.2 A/cm$^2$) (V) in Examples 1 to 7 and Comparative Examples 1 to 3.

Fig. 7 is a view showing a relationship between average particle size (nm) and cell voltage (@ 2.6 A/cm$^2$) (V) in Examples 1 to 7 and Comparative Examples 1 to 3.

Fig. 8 is a view showing a relationship between standard deviation (nm) and cell voltage (@ 2.6 A/cm$^2$) (V) in Examples 1 to 7 and Comparative Examples 1 to 3.

Description of Embodiments

Hereinafter, the core-shell catalysts of the present invention and the method for producing the same will be described in detail.

In the present invention, core containing palladium (hereinafter may be referred to as Pd-containing core) is a general term for a core made of palladium and a core made of a palladium alloy. Similarly, palladium-containing particle (hereinafter may be referred to as Pd-containing particle) is a general term for a palladium particle and a palladium alloy particle.

As the palladium alloy, there may be mentioned an alloy of palladium and a metal material selected from the group consisting of iridium, ruthenium, rhodium, iron, cobalt, nickel, copper, silver and gold. As the metal material, there may be used one or more kinds thereof.

In the palladium alloy, the palladium content preferably accounts for 50% by mass or more and less than 100% by mass of the total mass (100% by mass) of the alloy. This is because a pt-containing uniform shell can be formed when the palladium content is 50% by mass or more.

Also in the present invention, shell containing platinum (hereinafter may be referred to as Pt-containing shell) is a general term for a shell made of platinum and a shell made of a platinum alloy.

As the platinum alloy, there may be mentioned an alloy of platinum and a metal material selected from the group consisting of iridium, ruthenium, rhodium, nickel and gold. The metal constituting the platinum alloy, which is other than platinum, can be one or more kinds of metals.

In the platinum alloy, the platinum content preferably accounts for 50% by mass or more and less than 100% by mass of the total mass (100% by mass) of the alloy. This is because sufficient catalytic activity and durability cannot be obtained when the platinum content is less than 50% by mass.

In the present invention, that the shell covers the core encompasses not only a configuration in which the whole surface of the core is covered with the shell, but also a configuration in which the core surface is partly covered with the shell and is partly exposed.

1. Core-shell catalysts

The core-shell catalysts of the present invention are core-shell catalysts comprising a core containing palladium and a shell containing platinum and covering the core, wherein, in a number-based particle size frequency distribution, an average particle size is 4.70 nm or less; a standard deviation is 2.00 nm or less; and a frequency of a particle size of 5.00 nm or less is 55% or more.

To achieve the core-shell catalysts in which the Pd-containing core is covered with the Pt-containing shell (hereinafter may be referred to as Pt/Pd core-shell catalysts) and which provide high battery performance when used to constitute a unit cell of a fuel cell, the inventor of the present invention researched and made the following findings.

That is, conventional Pt/Pd core-shell catalysts have such a problem that in the production process, the surface of the Pd-containing particle which has a large particle size that is as large as 5.00 nm or more, is not easily covered with the Pt-containing shell. In the case of a unit cell using Pt/Pd core-shell catalysts in which the Pd-containing core is exposed, the palladium is eluted from the Pd-containing core at the time of power generation, and the eluted palladium is re-deposited on the Pt-containing shell. As a result, the catalytic activity of the Pt/Pd core-shell catalysts is decreased, and a desired power output cannot be obtained even in a low current density range. Also, since the Pd-containing core is not easily covered with the Pt-containing shell, the platinum surface area is insufficient, and a desired power output cannot be obtained in a high current density range.

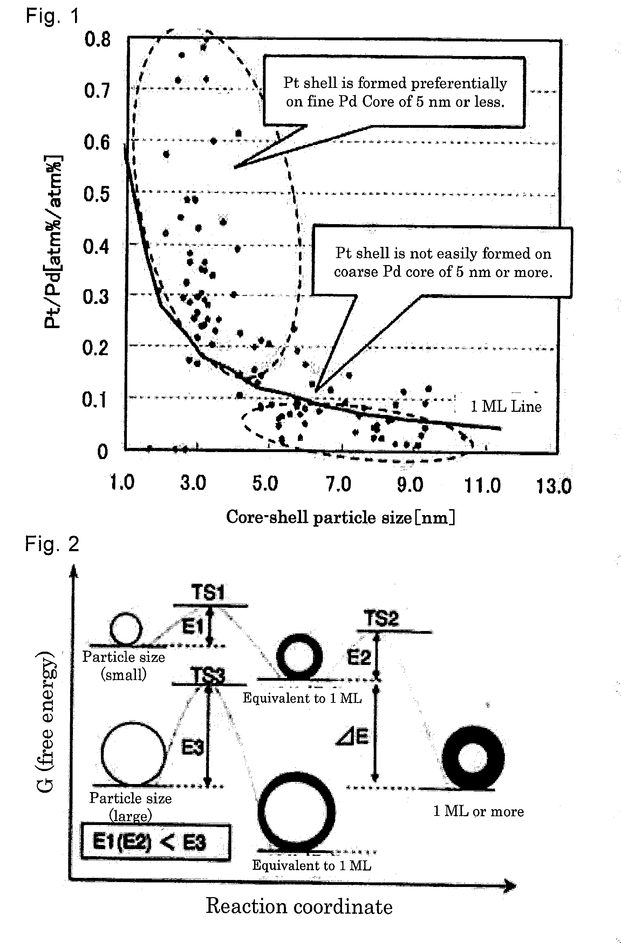

Accordingly, for conventional Pt/Pd core-shell catalysts, the inventor of the present invention measured the relationship between the particle size and the atomic ratio of the platinum and palladium (dots in Fig. 1) using transmission electron microscopy-energy dispersive spectrometry (TEM-EDS). In addition, the particle size and the atomic ratio of the platinum and palladium when all of the atoms present on the catalyst particle surface are platinum atoms and all of the atoms present inside thereof are palladium atoms, that is, when the platinum-containing shell is a Pt monolayer (platinum monatomic layer) were calculated by simulation (1 ML line in Fig. 1).

As shown in Fig. 1, for Pt/Pd core-shell catalysts which have a large particle size that is as large as more than 5 nm, it has been found that the Pt ratio is small and below the 1 ML line, and the Pd core tends to be exposed. Meanwhile, for Pt/Pd core-shell catalysts which have a small particle size that is as small as 5 nm or less, it has been found that the Pt ratio is large and tends to be above 1 ML line. This is considered to be because the Pt-containing shell is not easily formed when the Pd-containing particle (a raw material for Pt/Pd core-shell catalysts) has a large particle size, and the small Pd-containing particle is preferentially covered with the Pt-containing shell.

As described above, the mechanism that the Pt-containing shell is not easily formed on the large-size Pd-containing particle and the formation of the Pt-containing shell preferentially progresses on the small-size Pd-containing particle, is presumed as follows. Fig. 2 shows reaction coordinate and free energy (Gibbs energy) upon the formation of a Pt shell on the surface of a Pd particle and the formation of a Pt/Pd core-shell, and TS1 to TS3 mean free energies in reactions.

As shown in Fig. 2, first, the small-size Pd-containing particle has higher free energy (Gibbs energy) than the large-size Pd-containing particle and is considered to be thermally unstable. Also, the small-size Pd-containing particle requires smaller activation energy to form a Pt monolayer than the large-size Pd-containing particle (E1<E3) and is considered to be kinetically advantageous. In addition, since the particle size of the small-size Pd-containing particle remains smaller than the large-size Pd-containing particle even after the Pt monolayer is formed thereon (the increase in particle size is about 0.5 nm), it is considered that a second Pt layer is deposited on the Pt (Pt-Pt bonding) and decreases the amount of heat. At this time, the heat of formation $\Delta E$ upon the Pt-Pt bonding, is presumed to be large. Therefore, the formation of the Pt monolayer on the large-size Pd-containing particle and the formation of the Pt layers on the small-size Pd-containing particle are considered to progress together, competing with each other. As a result, the formation of the Pt layers on the small-size Pd-containing particle is considered to have a larger whole system stabilizing effect and preferentially progress.

Based on the above findings, the inventor of the present invention pursued further research. As a result, the inventor has found that Pt/Pd core-shell catalysts such that in the number-based particle size frequency distribution, the average particle size is 4.70 nm or less; the standard deviation is 2.00 nm or less; and the frequency of a particle size of 5.00 nm or less is 55% or more, can show excellent power generation performance. Based on this finding, the inventor of the present invention finally completed the present invention. In particular, the inventor of the present invention has found that a unit cell using such core-shell catalysts that the average particle size, standard deviation and frequency are all within the above ranges, provides high voltage in a high current density range (under a high load condition). That is, according to the present invention, a high-power fuel cell can be obtained.

The reason why high voltage can be obtained in a high current density range by using the core-shell catalysts of the present invention, is considered as follows. First, it is presumed that in the core-shell catalysts of the present invention, the coverage of the Pd-containing core with the Pt-containing shell is high, so that the Pd is less exposed and the Pt-containing shell is uniformly formed on the Pd-containing core surface. Therefore, the specific surface area of the Pt is considered to be larger compared to conventional cases. In the unit cell under a high load condition such as a high current density range, gas diffusion is more dominant than catalytic activity; however, it is considered that as the specific surface area of the Pt increases, the area of contact between the Pt and a reaction gas increases, and high voltage can be obtained.

In the present invention, the average particle size, standard deviation and frequency of the core-shell catalysts are values in the number-based particle size frequency distribution, and they are also values of primary particles.

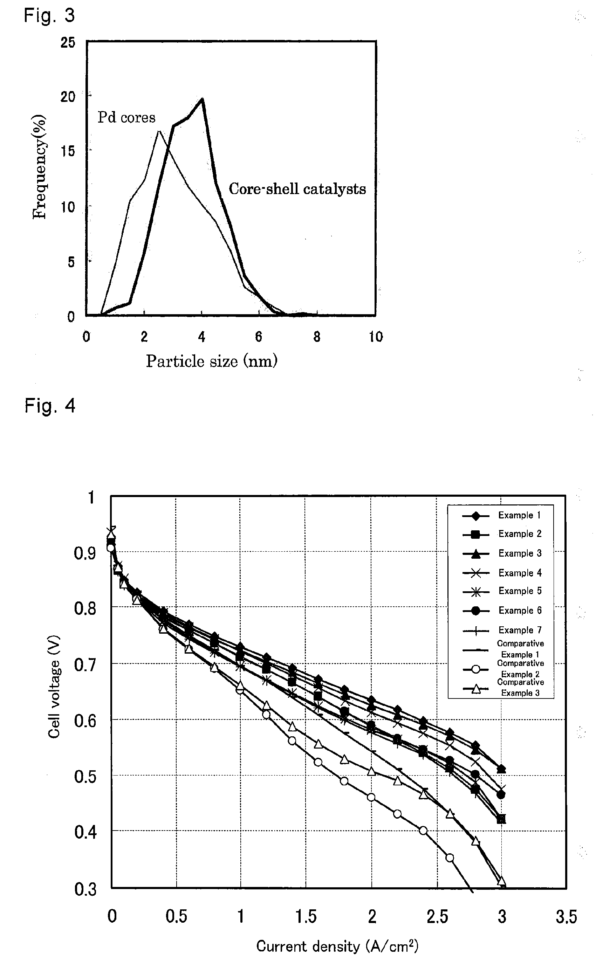

Also in the present invention, the average particle size, standard deviation and frequency can be obtained by measuring the particle size of 600 or more of the core-shell catalysts by TEM (transmission electron microscope) image analysis and making a particle size distribution histogram (see Fig. 3). The particle size of the core-shell catalysts are is a diameter which is calculated by converting the projected area of each particle obtained in the TEM image analysis into a circle, and which is calculated considering the projected area to be equal to a true circle. In the TEM image analysis, to obtain an accurate particle size distribution, it is preferable to extract and measure the core-shell particles which are present (alone) in the state of primary particles. Also, the frequency of a particle size of 5.00 nm or less means the proportion of the particles which have a particle size of 5.00 nm or less to the total particles which constitute the core-shell catalysts.

The frequency of the core-shell catalysts of the present invention is needed to be 55% or more. From the point of view that a voltage increasing effect in a high current density range is particularly high, the frequency is preferably 71% or more, more preferably 73% or more, still more preferably 75% or more, and particularly preferably 84% or more. From the point of view that the voltage increasing effect can be also obtained in a low current density range (under a low load condition), the frequency is preferably 58% or more, more preferably 60% or more, still more preferably 70% or more, particularly preferably 84% or more.

The average particle size of the core-shell catalysts of the present invention is needed to be 4.70 nm or less. From the point of view that the voltage increasing effect in a high current density range is high, the average particle size is preferably 4.40 nm or less, more preferably 4.10 nm or less, still more preferably 3.90 nm or less, when the frequency is 71% or more. On the other hand, from the viewpoint of the mass activity of the core-shell catalysts, generally, the average particle size of the core-shell catalysts is preferably 2.50 nm or more.

The standard deviation of the core-shell catalysts of the present invention is needed to be 2.00 nm or less. Since the voltage increasing effect in a high current density range is high, the standard deviation is preferably 1.60 nm or less, more preferably 1.10 nm or less, still more preferably 0.80 nm or less, when the frequency is 71% or more.

The Pt-containing shell can be any one of a shell made of platinum and a shell made of a platinum alloy. In general, it is preferably a shell made of platinum.

According to the present invention, the Pt/Pd core-shell catalysts which have the Pt-containing shells that have an average thickness of 0.50 nm or less, 0.40nm or less, or 0.35 nm or less can be provided. Since the thickness of the Pt monolayer is 0.20 nm, the average thickness of the Pt-containing shells is preferably 0.20 nm or more. In the below-described examples, it was confirmed that the average thickness of the Pt-containing shells is 0.21 to 0.33 nm.

The average thickness t of the Pt-containing shells can be calculated as follows, for example. In particular, the difference between the average particle size $D_{ave1}$ of the Pt/Pd core-shell catalysts and the average particle size $D_{ave2}$ of the Pd-containing cores is considered to be twice the average thickness t of the Pt-containing shells, so that the average thickness t can be calculated by the following formula:

$$t = (D_{ave1} - D_{ave2})/2$$

The average particle size $D_{ave1}$ of the Pt/Pd core-shell catalysts can be calculated in the same manner as the above-described method.

For example, the average particle size $D_{ave2}$ of the Pd-containing cores can be considered as a value obtained by measuring and calculating the average particle size of the Pd-containing particles (raw material particles) which are not yet covered with the Pt-containing shells. The average particle size of the Pd-containing particles may be changed by a pre-treatment that is carried out for the purpose of washing, etc., before the particles are covered with the Pt-containing shells. Accordingly, it is preferable to measure and calculate the average particle size of the Pd-containing particles, after the pre-treatment is carried on the particles and the particles are brought into a state in which the particles can maintain the average particle size that is equivalent to the Pd-containing cores in the Pt/Pd core-shell catalysts. In the below-described examples, the average particle size of the Pd particles measured and calculated after the pre-treatment, is considered as the average particle size of the Pd cores, and the average thickness of the Pt-containing shells is calculated from the difference between the average particle size of the Pd particles and that of the Pt/Pd core-shell catalysts. Also, in the below-described examples, the Pt/Pd core-shell catalysts in which the Pd core is covered with the Pt shell are produced by forming a Cu layer on the Pd particle surface by the below-described underpotential (UPD) method and then substituting the Cu layer with Pt. In such a process of forming the Pt-containing shell by Cu-UPD and Pt substitution, it is considered that there is no elution of the Pd-containing particle subjected to the pre-treatment, etc., and there is no change in the average particle size of the Pd-containing particles before and after the formation of the Pt-containing shell.

As the Pd-containing core of the core-shell catalysts of the present invention, there may be mentioned a core made of palladium and a core made of a palladium alloy. In general, a Pd core (core made of palladium) is preferred.

The average particle size of the Pd-containing cores is not particularly limited, as long as it is less than the average particle size of the Pt/Pd core-shell catalysts. For example, in the number-based particle size frequency distribution, the average particle size of the Pd-containing cores is preferably 4.40 nm or less. From the viewpoint of efficient platinum use, it is preferably 2.00 nm or more.

The core-shell catalysts of the present invention can be supported on electroconductive carriers. Examples thereof include electroconductive carbonaceous materials and metal materials, the electroconductive carbonaceous materials including carbon particles and carbon fibers such as Ketjen Black (product name; manufactured by: Ketjen Black International Company), VULCAN (product name; manufactured by: Cabot), Norit (product name; manufactured by: Norit), BLACK PEARLS (product name; manufactured by: Cabot) and OSAB (product name; manufactured by: Denki Kagaku Kogyo Kabushiki Kaisha) and acetylene black manufactured by Chevron, and the metal materials including as metal particles and metal fibers.

The average particle size of the electroconductive carriers is not particularly limited and is preferably 0.01 $\mu$m to hundreds of micrometers ($\mu$m), more preferably 0.01 to 1 $\mu$m. When the average particle size of the electroconductive carriers is less than the range, the electroconductive carriers may cause corrosion degradation, and the Pt/Pd core-shell catalysts supported on the electroconductive carriers may be detached over time. When the average particle size of the electroconductive carriers is more than the range, the specific surface area is small and may decrease the dispersibility of the Pt/Pd core-shell catalysts.

The specific surface area of the electroconductive carriers is not particularly limited and is preferably 50 to 2,000 $m^2$/g, more preferably 100 to 1,600 $m^2$/g. When the specific surface area of the electroconductive carriers is less than the range, the dispersibility of the Pt/Pd core-shell catalysts onto the electroconductive carriers may decrease. When the specific surface area of the electroconductive carriers is more than the range, the effective utilization rate of the Pt/Pd core-shell catalysts may decrease.

The Pt/Pd core-shell catalyst supporting rate by the electroconductive carrier [{(the mass of the Pt/Pd core-shell catalyst)/(the mass of the Pt/Pd core-shell catalyst + the mass of the electroconductive carrier)} $\times$ 100%] is not particularly limited. In general, it is preferably in a range of 20 to 60%.

The method for producing the core-shell catalysts of the present invention is not particularly limited. For example, it can be produced by the below-described core-shell catalyst production method of the present invention.

2. The method for producing the core-shell catalysts

The core-shell catalyst production method of the present invention is a method for producing the core-shell catalysts of the present invention, wherein a platinum-containing shell is deposited on the surface of a palladium-containing particle in which, in the number-based particle size frequency distribution, the average particle size is 4.40 nm or less; the standard deviation is 2.00 nm or less; and the frequency of a particle size of 5.00 nm or less is 65% or more.

In the present invention, similarly to the core-shell catalysts, the average particle size, standard deviation and frequency of the Pd-containing particles (raw material particles) are values in the number-based particle size frequency distribution, and they are also values of primary particles. Also, similarly to the core-shell catalysts, the average particle size, standard deviation and frequency of the Pd-containing particles can be obtained by measuring the particle size of 600 or more of the Pd-containing particles by TEM (transmission electron microscope) image analysis and making a particle size distribution histogram (see Fig. 3). Similarly to the core-shell catalysts, the particle size of the Pd-containing particles is a diameter which is calculated by converting the projected area of each particle obtained in the TEM image analysis into a circle, and which can be calculated considering the projected area to be equal to a true circle.

Also, the average particle size, standard deviation and frequency of the Pd-containing particles are preferably values just before the Pt-containing shells are deposited (just before being covered with the Pt-containing shells). As described above, the average particle size of the Pd-containing particles may be changed by a pre-treatment that is carried out for the purpose of washing, etc., before the particles are covered with the Pt-containing shells. Similarly, the standard deviation and frequency may be changed. Accordingly, it is preferable to measure and calculate the average particle size, standard deviation and frequency of the Pd-containing particles, after the pre-treatment is carried out on the Pd-containing particles and the particles are brought into a state in which the average particle size, standard deviation and frequency do not change or are less likely to change.

As the pre-treatment of the Pd-containing particles, there may be used general methods. For example, there may be mentioned a hydrogen bubbling treatment in pure water or an acidic solution, a potential cycle, etc. A combination of the hydrogen bubbling treatment and the potential cycle can be also used. Detailed processes, conditions and so on of the hydrogen bubbling treatment and the potential cycle can be appropriately determined.

For example, as the acidic solution, there may be mentioned a solution containing an acid such as sulfuric acid. The pH of the acidic solution, the treatment time and so on can be appropriately determined. As the potential sweep range of the potential cycle, for example, there may be mentioned a range of 0.1 to 1 V (vs. RHE). The number of cycles, the sweep rate and so on can be appropriately determined. For example, the potential cycle can be carried out in acidic solution.

As the Pd-containing particle, there may be mentioned a palladium particle and a palladium alloy particle. In general, a palladium particle is preferred.

The frequency of the Pd-containing particles is needed to be 65% or more. Since the core-shell catalysts which have a particularly high voltage increasing effect in a high current density range are easily obtained, the frequency is preferably larger than 82%, more preferably 83% or more, still more preferably 84% or more, particularly preferably 89% or more. Also, since the core-shell catalysts which show high voltage even in a low current density range (under a low load condition) are easily obtained, the frequency is preferably 71% or more, more preferably 72% or more, still more preferably 82% or more, particularly preferably 89% or more.

The average particle size of the Pd-containing particles is needed to be 4.40 nm or less. Since the core-shell catalysts which have a high voltage increasing effect in a high current density range are easily obtained, the average particle size is preferably 3.80 nm or less, more preferably 3.60 nm or less, still more preferably 3.40 nm or less, when the frequency is larger than 82%. On the other hand, from the viewpoint of the mass activity of the core-shell catalysts, generally, the average particle size of the Pd-containing particles is preferably 2.00 nm or more.

The standard deviation of the Pd-containing particles is needed to be 2.00 nm or less. Since the core-shell catalysts which have a high voltage increasing effect in a high current density range are easily obtained, the standard deviation is preferably 1.40 nm or less, more preferably 1.30 nm or less, still more preferably 1.20 nm or less, when the frequency is larger than 82%.

The Pd-containing particles can be supported on electroconductive carriers. The electroconductive carriers are not described below since they have been described above in the section of the core-shell catalysts.

Pd particle supports in which the Pd particles are supported on the electroconductive carriers can be a commercially-available product or can be synthesized. To support the Pd-containing particles on the electroconductive carriers, there may be used conventionally-used methods. For example, there may be mentioned the following method: an electroconductive carrier dispersion in which the electroconductive carriers are dispersed is mixed with the Pd-containing particles, and the mixture is filtered, washed, redispersed in ethanol or the like, and then dried using a vacuum pump or the like, thereby supporting the particles on the electroconductive carriers. After the drying, the resultant can be heated as needed. In the case of using Pd alloy particles, synthesis of the alloy and supporting of the Pd alloy particles on the electroconductive carriers can be carried out at the same time.

The method for depositing the Pt-containing shell on the Pd-containing particle surface is not particularly limited, and any conventionally-known method can be used. For example, the Pt-containing shell can be deposited on the Pd-containing particle surface by a one-step reaction such as electrolytic plating or electroless plating. Also, the Pt-containing shell can be deposited by depositing a metal layer other than the Pt-containing shell (such as a copper layer) on the Pd-containing particle surface by underpotential deposition (UPD) and then substituting the metal layer with Pt.

Hereinafter, the method for depositing the Pt-containing shell on the surface of the Pd-containing particle will be described, taking a method that uses Cu-UPD as an example.

As the core-shell catalyst production method, a displacement plating method that uses Cu-UPD has been known. Cu-UPD is a phenomenon in which a Cu monatomic layer in a metal state is formed on the surface of a different metal that has strong binding force to Cu, by applying a nobler potential than the oxidation-reduction potential of Cu. The core-shell catalysts in which the Pd-containing core is covered with the Pt-containing shell can be produced by immersing a Pd-containing particle which has a Cu atomic layer formed thereon by Cu-UPD in a solution that contains Pt ions, and substituting the Cu with Pt using a difference in ionization tendency.

Cu is energetically stable on Pd. Accordingly, the Cu atomic layer can be deposited on the surface of the Pd-containing particle by applying a nobler potential than the oxidation-reduction potential of Cu. Also, since the ionization tendency of Cu is larger than Pt, the Cu on the Pd-containing particle surface can be substituted with Pt and, therefore, the core-shell catalysts in which the surface of the Pd-containing particle is covered with Pt can be produced.

Hereinafter, the step of forming the Cu atomic layer on the Pd-containing particle surface and the step of substituting the Cu on the Pd-containing particle with Pt will be described in order.

(1) The step of forming the Cu atomic layer on the Pd-containing particle surface (Cu-UPD step)

The deposition of the copper atomic layer on the surface of the Pd-containing particle by Cu-UPD, can be caused by applying a nobler potential than the oxidation-reduction potential (equilibrium potential) of Cu to the Pd-containing particle which is in a state of being in contact with an electrolyte that contains Cu ions (for example, being immersed in the electrolyte).

The electrolyte that contains Cu ions (hereinafter may be referred to as Cu ion-containing electrolyte) is not particularly limited, as long as it is an electrolyte that can deposit copper on the surface of the Pd-containing particle by Cu-UPD. The Cu ion-containing electrolyte is generally composed of a solvent in which a given amount of copper salt is dissolved. However, the electrolyte is not limited to this constitution and is needed to be an electrolyte in which part or all of the Cu ions are separately present.

As the solvent used for the Cu ion-containing electrolyte, there may be mentioned water and organic solvents. Water is preferred from the point of view that it does not prevent the deposition of Cu on the surface of the Pd-containing particle.

Concrete examples of the copper salt used for the Cu ion-containing electrolyte include copper sulfate, copper nitrate, copper chloride, copper chlorite, copper perchlorate and copper oxalate.

The Cu ion concentration of the electrolyte is not particularly limited and is preferably 10 to 1,000 mM.

In addition to the solvent and the copper salt, the Cu ion-containing electrolyte can contain an acid, for example. Concrete examples of the acid that can be added to the Cu ion-containing electrolyte include sulfuric acid, nitric acid, hydrochloric acid, chlorous acid, perchloric acid and oxalic acid. Counter anions in the Cu ion-containing electrolyte and counter anions in the acid can be the same kind or different kinds of counter anions.

It is also preferable to bubble an inert gas into the electrolyte in advance. This is because the Pd-containing particle can be inhibited from oxidation and can be uniformly covered with the Pt-containing shell. As the inert gas, there may be used nitrogen gas, argon gas, etc.

The Pd-containing particles can be immersed and dispersed in the electrolyte by adding the particles being in a powdery state to the electrolyte, or the Pd-containing particles can be immersed and dispersed in the electrolyte by dispersing them in a solvent to prepare a Pd-containing particle dispersion and then adding the dispersion to the electrolyte. As the solvent used for the Pd-containing particle dispersion, there may be used the same solvent as that used for the above-mentioned Cu ion-containing electrolyte. Also, the Pd-containing particle dispersion can contain the above-described acid that can be added to the Cu ion-containing electrolyte.

Also, the Pd-containing particles can be immersed in the electrolyte by fixing the particles on an electroconductive substrate or working electrode and then immersing the Pd-containing particle-fixed side of the electroconductive substrate or working electrode in the electrolyte. To fix the Pd-containing particles, for example, there may be mentioned the following method: a paste containing the Pd-containing particles is prepared using an electrolyte resin (such as Nafion (trade name)) and a solvent (such as water or alcohol), and the paste is applied to a surface of the electroconductive substrate or working electrode, thereby fixing the Pd-containing particles.

The method for applying a nobler potential than the oxidation-reduction potential of Cu to the Pd-containing particle is not particularly limited. For example, there may be mentioned a method of immersing a working electrode, counter electrode and reference electrode in the Cu ion-containing electrolyte and then applying a nobler potential than the oxidation-reduction potential of Cu to the working electrode.

As the working electrode, for example, materials that can ensure electroconductivity, such as metal materials including titanium, a platinum mesh and a platinum plate, and electroconductive carbonaceous materials including glassy carbon and a carbon plate, can be used. Also, the reaction container can be formed with any of the electroconductive materials and used as the working electrode. When the reaction container made of a metal material is used as the working electrode, it is preferable that the inner wall of the reaction container is coated with $RuO_2$, from the viewpoint of preventing corrosion. When the reaction container made of a carbonaceous material is used as the working electrode, the container can be used as it is without any coating.

As the counter electrode, for example, there may be used a platinum black-plated platinum mesh and electroconductive carbon fibers.

As the reference electrode, for example, there may be used a reversible hydrogen electrode (RHE), a silver-silver chloride electrode and a silver-silver chloride-potassium chloride electrode.

As the potential control device, for example, there may be used a potentiostat and a potentio-galvanostat.

The applied potential is not particularly limited, as long as it is a potential that can deposit Cu on the surface of the Pd-containing particle, that is, it is a nobler potential than the oxidation-reduction potential of Cu. For example, the applied potential is preferably in a range of 0.35 to 0.4 V (vs. RHE).

The potential applying time is not particularly limited. It is preferably 60 minutes or more, and it is more preferable to apply the potential until reaction current becomes steady and close to zero.

The potential can be also applied by sweeping the potential in a range that includes the above-described potential range. In particular, the potential sweep range is preferably 0.3 to 0.8 V (vs. RHE).

The number of the cycles of the potential sweep is not particularly limited and is preferably 1 to 20 cycles. The potential sweep rate is 0.01 to 100 mV/sec, for example.

The Cu-UPD is preferably carried out under an inert gas atmosphere such as nitrogen atmosphere, from the viewpoint of preventing the oxidation of the surface of the Pd-containing particle or preventing the oxidation of the copper.

Also, it is preferable to appropriately stir the Cu ion-containing electrolyte as needed. For example, when a reaction container that serves as a working electrode is used and the Pd-containing particles are immersed and dispersed in the electrolyte contained in the reaction container, the palladium-containing particles can be brought into contact with the surface of the reaction container (working electrode) by stirring the electrolyte, so that the potential can be uniformly applied to the Pd-containing particles of each palladium particle support. In this case, the stirring can be carried out continuously or intermittently during the deposition of the Cu atomic layer.

(2) The step of substituting the Cu on the Pd-containing particle with Pt (Pt substitution step)

The method for substituting the Cu deposited on the Pd-containing particle surface in the Cu-UPD step (Cu atomic layer) with Pt is not particularly limited. In general, the Pd-containing particle on which the Cu is deposited is brought into contact with a solution that contains Pt ions (hereinafter may be referred to as Pt ion-containing solution), thereby substituting the Cu with Pt due to a difference in ionization tendency.

A platinum salt is used for the Pt ion-containing solution. As the platinum salt, for example, there may be used $K_2PtCl_4$, $K_2PtCl_6$, etc. Also, there may be used an ammonia complex such as ($[PtCl_4][Pt(NH_3)_4]$).

The Pt ion concentration of the Pt ion-containing solution is not particularly limited and is preferably 0.01 to 100 mM.

A solvent is used for the platinum ion-containing solution. The solvent that can be used for the Pt ion-containing solution can be the same solvent as that used for the above-described Cu ion-containing electrolyte. In addition to the solvent and the platinum salt, the Pt ion-containing solution can contain an acid, etc. Concrete examples of the acid include sulfuric acid, nitric acid, hydrochloric acid, chlorous acid, perchloric acid and oxalic acid.

The Pt ion-containing solution is sufficiently stirred in advance. From the viewpoint of preventing the oxidation of the surface of the Pd-containing particle or preventing the oxidation of the Cu, it is preferable to bubble nitrogen into the solution in advance.

The substitution time (the contact time of the Pt ion-containing solution and the Pd-containing particles) is not preferably limited and is preferably 10 minutes or more. The potential of the reaction solution increases as the Pt ion-containing solution is added, so that it is more preferable to continue the substitution until the monitored potential shows no change.

When the Cu-UPD step and the Pt substitution step are carried out in the same reaction container, the Pt ion-containing solution can be added to the electrolyte used in the Cu-UPD step. For example, the Pd-containing particle on which the Cu is deposited can be brought into contact with the Pt ion-containing solution by, after the Cu-UPD step, stopping the potential control and adding the Pt ion-containing solution to the Cu ion-containing electrolyte used in the Cu-UPD step.

(3) Other steps

Filtering, washing, drying, pulverizing, etc., of the Pt/Pd core-shell catalysts can be carried out after the Pt substitution step.

The method for washing the core-shell catalysts is not particularly limited, as long as it is a method that can remove impurities without any damage to the core-shell structure of the core-shell catalysts thus produced. As the washing method, for example, there may be mentioned suction filtration using water, perchloric acid, dilute sulfuric acid, dilute nitric acid, etc.

The method for drying the core-shell catalysts is not particularly limited, as long as it is a method that can remove the solvent, etc. For example, there may be mentioned a drying method in which the temperature is kept at 50 to 100°C for 6 to 12 hours under an inert gas atmosphere.

As needed, the core-shell catalysts can be pulverized. The pulverizing method is not particularly limited, as long as it is a method that can pulverize solids. Examples of the pulverization include pulverization using a mortar or the like under an inert atmosphere or in the atmosphere, and mechanical milling using a ball mill, turbo mill or the like.

According to the core-shell catalyst production method of the present invention, the Pt/Pd core-shell catalysts which have the Pt-containing shells that have an average thickness of 0.50 nm or less, 0.40 nm or less, or 0.35 nm or less can be produced. Since the thickness of the Pt monolayer is 0.20 nm, the average thickness of the Pt-containing shells is preferably 0.20 nm or more. In the below-described examples, the average thickness of the Pt-containing shells was confirmed to be 0.21 to 0.33 nm.

Examples

[Production of Pt/Pd core-shell catalysts]

(Example 1)

First, Pd particles were pre-treated as follows. First, 1 g of carbon particles on which Pd particles are supported (hereinafter may be referred to as Pd/C) and an acidic solution were put in a reaction container made of a carbonaceous material. A hydrogen electrode, the reaction container and a platinum mesh were used as a reference electrode, a working electrode and a counter electrode, respectively. A potential sweep was carried out on the working electrode in a potential range of 0.1 V to1 V (vs. RHE).

Of Pd particles pre-treated in the same manner as above, 600 or more of them were extracted and measured for particle size by TEM image analysis. A particle size distribution histogram (see Fig. 3) was created, and the average particle size, standard deviation and frequency of a particle size of 5.00 nm or less of the particles were calculated. In the TEM image analysis, to obtain an accurate particle size distribution, the Pd particles which were present (alone) in the state of primary particles were extracted and measured. As shown in Fig. 3, in the number-based particle size frequency distribution, the pre-treated Pd particles were such that the average particle size is 3.34 nm; the standard deviation is 1.26 nm; and the frequency of a particle size of 5.00 nm or less is 89%.

Next, a Pt-containing shell was formed on the pre-treated Pd particle surface as follows. First, after the pre-treatment, 50 mM of a Cu ion-containing electrolyte (copper sulfate aqueous solution) was added in the reaction container. Then, 0.37 V was applied to the working electrode for 3 hours. Thereafter, $K_2PtCl_4$ was added in the reaction container in a dropwise manner, which was added in an amount that allows the Pt shell formed on the Pd particle surface to be 1 ML.

Then, the solution in the reaction container was filtered to collect a powder (Pt/Pd core-shell catalysts).

The collected Pt/Pd core-shell catalysts were washed with warm water (pure water) several times and then dried.

For the thus-obtained Pt/Pd core-shell catalysts, in the same manner as the Pd particles, the average particle size, standard deviation and frequency in the number-based particle size frequency distribution were calculated. Therefore, as shown in Fig. 3, the average particle size was 3.90 nm; the standard deviation was 1.02 nm; and the frequency of a particle size of 5.00 nm or less was 84%.

The pre-treated Pd particles are considered to have no change in the number-based particle size frequency distribution thereof during the Pt-containing shell forming process, so that the pre-treated Pd particles and the Pd cores in the thus-obtained Pt/Pd core-shell catalysts are considered to have the same particle size frequency distribution. Therefore, it is considered that the difference between the average particle size of the pre-treated Pd particles and that of the Pt/Pd core-shell catalysts corresponds to twice the average thickness of the Pt-containing shells. The average thickness of the Pt-containing shells was calculated by the following formula: the average thickness=[(the average particle size of the Pt/Pd core-shell catalysts)-(the average particle size of the Pd particles)]/2. As a result, the average thickness was 0.28 nm. The result is shown in Table 1.

(Example 2)

Pt/Pd core-shell catalysts were produced in the same manner as Example 1, except that the following Pd particles were used: in the number-based particle size frequency distribution after the pre-treatment, the average particle size is 3.80 nm; the standard deviation is 1.12 nm; and the frequency of a particle size of 5.00 nm or less is 84%.

The thus-obtained Pt/Pd core-shell catalysts were such that in the number-based particle size frequency distribution, the average particle size was 4.40 nm; the standard deviation was 0.75 nm; and the frequency of a particle size of 5.00 nm or less was 75%.

The average thickness of the Pt-containing shells was 0.30 nm.

(Example 3)

Pt/Pd core-shell catalysts were produced in the same manner as Example 1, except that the following Pd particles were used: in the number-based particle size frequency distribution after the pre-treatment, the average particle size is 3.60 nm; the standard deviation is 1.38 nm; and the frequency of a particle size of 5.00 nm or less is 83%.

The thus-obtained Pt/Pd core-shell catalysts were such that in the number-based particle size frequency distribution, the average particle size was 4.04 nm; the standard deviation was 1.60 nm; and the frequency of a particle size of 5.00 nm or less was 73%.

The average thickness of the Pt-containing shells was 0.22 nm.

(Example 4)

Pt/Pd core-shell catalysts were produced in the same manner as Example 1, except that the following Pd particles were used: in the number-based particle size frequency distribution after the pre-treatment, the average particle size is 3.77 nm; the standard deviation is 1.25 nm; and the frequency of a particle size of 5.00 nm or less is 82%.
The thus-obtained Pt/Pd core-shell catalysts were such that in the number-based particle size frequency distribution, the average particle size was 4.43 nm; the standard deviation was 1.02 nm; and the frequency of a particle size of 5.00 nm or less was 70%.
The average thickness of the Pt-containing shells was 0.33 nm.

(Example 5)

Pt/Pd core-shell catalysts were produced in the same manner as Example 1, except that the following Pd particles were used: in the number-based particle size frequency distribution after the pre-treatment, the average particle size is 3.77 nm; the standard deviation is 1.33 nm; and the frequency of a particle size of 5.00 nm or less is 80%.
The thus-obtained Pt/Pd core-shell catalysts were such that in the number-based particle size frequency distribution, the average particle size was 4.34 nm; the standard deviation was 1.57 nm; and the frequency of a particle size of 5.00 nm or less was 64%.
The average thickness of the Pt-containing shells was 0.29 nm.

(Example 6)

Pt/Pd core-shell catalysts were produced in the same manner as Example 1, except that the following Pd particles were used: in the number-based particle size frequency distribution after the pre-treatment, the average particle size is 4.10 nm; the standard deviation is 1.55 nm; and the frequency of a particle size of 5.00 nm or less is 72%.
The thus-obtained Pt/Pd core-shell catalysts were such that in the number-based particle size frequency distribution, the average particle size was 4.60 nm; the standard deviation was 1.65 nm; and the frequency of a particle size of 5.00 nm or less was 60%.
The average thickness of the Pt-containing shells was 0.25 nm.

(Example 7)

Pt/Pd core-shell catalysts were produced in the same manner as Example 1, except that the following Pd particles were used: in the number-based particle size frequency distribution after the pre-treatment, the average particle size is 4.05 nm; the standard deviation is 1.56 nm; and the frequency of a particle size of 5.00 nm or less is 71%.
The thus-obtained Pt/Pd core-shell catalysts were such that in the number-based particle size frequency distribution, the average particle size was 4.46 nm; the standard deviation was 1.91 nm; and the frequency of a particle size of 5.00 nm or less was 58%.
The average thickness of the Pt-containing shells was 0.21 nm.

(Comparative Example 1)

Pt/Pd core-shell catalysts were produced in the same manner as Example 1, except that the following Pd particles were used: in the number-based particle size frequency distribution after the pre-treatment, the average particle size is 4.50 nm; the standard deviation is 1.19 nm; and the frequency of a particle size of 5.00 nm or less is 64%.
The thus-obtained Pt/Pd core-shell catalysts were such that in the number-based particle size frequency distribution, the average particle size was 4.80 nm; the standard deviation was 1.12 nm; and the frequency of a particle size of 5.00 nm or less was 54%.
The average thickness of the Pt-containing shells was 0.15 nm.

(Comparative Example 2)

Pt/Pd core-shell catalysts were produced in the same manner as Example 1, except that the following Pd particles were used: in the number-based particle size frequency distribution after the pre-treatment, the average particle size, the standard deviation, and the frequency of a particle size of 5.00 nm or less are different.
The thus-obtained Pt/Pd core-shell catalysts were such that in the number-based particle size frequency distribution, the average particle size was 5.00 nm; the standard deviation was 2.19 nm; and the frequency of a particle size of 5.00 nm or less was 48%.

(Comparative Example 3)

Pt/Pd core-shell catalysts were produced in the same manner as Example 1, except that the following Pd particles were used: in the number-based particle size frequency distribution after the pre-treatment, the average particle size, the standard deviation and the frequency of a particle size of 5.00 nm or less were different.

The thus-obtained Pt/Pd core-shell catalysts were such that in the number-based particle size frequency distribution, the average particle size was 4.60 nm; the standard deviation was 2.52 nm; and the frequency of a particle size of 5.00 nm or less was 53%.

[Evaluation of power generation performance of MEA]

(Production of MEA)

MEAs were produced as follows, using the Pt/Pd core-shell catalysts of Example 1 to 7 and Comparative Example 1 to 3.

The core-shell catalysts of each of Example 1 to 7 and Comparative Example 1 to 3 were mixed with an electrolyte solution (20% by mass Nafion (trade name) solution) and solvents (water, 1-propanol and ethanol) and dispersed with a bead mill, thereby producing a cathode catalyst ink. The cathode catalyst ink was sprayed on one side of an electrolyte membrane and dried, thereby forming a cathode catalyst layer (20 cm$^2$).

An anode catalyst ink was produced in the same manner as the cathode catalyst ink, except that carbon particles on which Pt particles are supported (manufactured by Tanaka Kikinzoku Kogyo K. K.) were used. The anode catalyst ink was sprayed on the other side of the electrolyte membrane and dried, thereby forming an anode catalyst layer (20 cm$^2$).

The applied catalyst ink amount was as follows: the Pt amount in the catalyst ink was calculated in advance by ICP (inductively-coupled plasma) analysis, and the weight per unit area of the platinum was controlled to be 0.1 mg/cm$^2$ on each side of the electrolyte membrane. Also, by ICP analysis of the catalyst layers of the thus-produced MEA, it was confirmed that the weight per unit area of the Pt in the catalyst layer formed on each side of the electrolyte membrane was 0.1 mg/cm$^2$.

(Power generation performance evaluation method)

The above-produced MEAs of Examples 1 to 7 and Comparative Examples 1 to 3 were caused to generate power under the following conditions, thereby obtaining current density-voltage curves. The results are shown in Fig. 4.

Back pressure: 140 kPa [abs] at the anode and the cathode Gas flow rate: A flow rate corresponding to the stoichiometric ratio of current density 1.2/1.5 (anode flow rate/cathode flow rate) (no gas humidification)

Cell temperature (cooling water temperature): 70°C

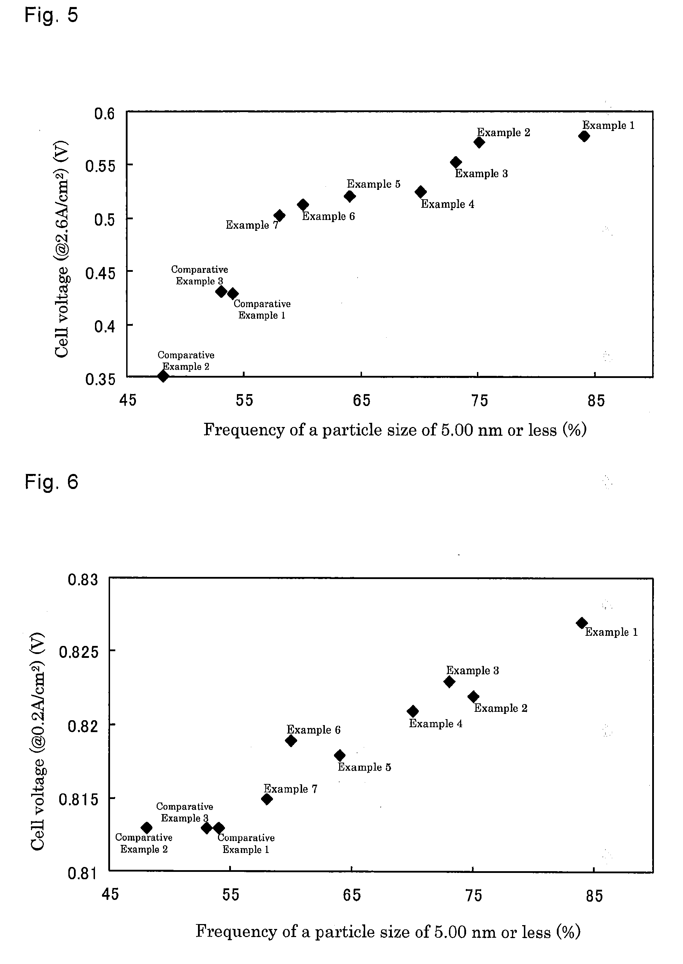

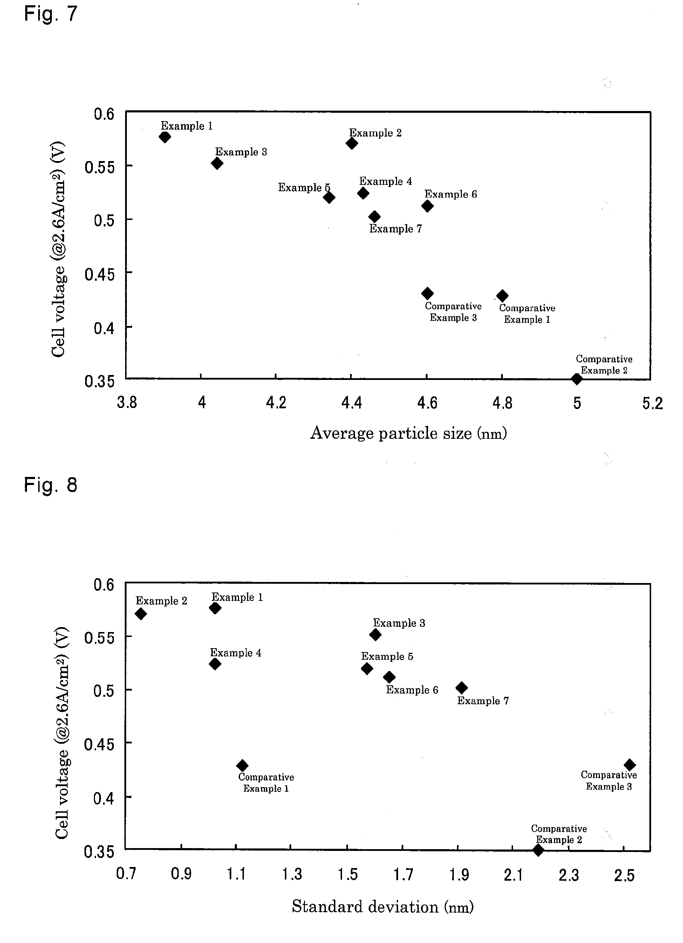

Voltages at current densities of 0.2 A/cm$^2$ and 2.6 A/cm$^2$ on the current density-voltage curves shown in Fig. 4 are listed in Table 1. Fig. 5 shows the relationship between the frequency of a particle size of 5.00 nm or less in the Pt/Pd core-shell catalysts and the cell voltage at a current density of 2.6 A/cm$^2$. Fig. 6 shows the relationship between the frequency of a particle size of 5.00 nm or less in the Pt/Pd core-shell catalysts and the cell voltage at a current density of 0.2 A/cm$^2$. Fig. 7 shows the relationship between the average particle size of the Pt/Pd core-shell catalysts and the cell voltage at a current density of 2.6 A/cm$^2$. Fig. 8 shows the relationship between the standard deviation of the Pt/Pd core-shell catalysts and the cell voltage at a current density of 2.6 A/cm$^2$.

Table 1

| | | Pre-treated Pd particles | | | Pt/Pd core-shell catalysts | | | Pt-containing shells | Performance | |
|---|---|---|---|---|---|---|---|---|---|---|
| | | Average particle size (nm) | Standard deviation (nm) | Frequency of particle size of 5.00 nm or less (%) | Average particle size (nm) | Standard deviation (nm) | Frequency of particle size of 5.00 nm or less (%) | Average thickness (nm) | Voltage (@ 0.2 A/cm$^2$) (V) | Voltage (@ 2.6 A/cm$^2$) (V) |
| Examples | 1 | 3.34 | 1.26 | 89 | 3.90 | 1.02 | 84 | 0.28 | 0.827 | 0.578 |
| | 2 | 3.80 | 1.12 | 84 | 4.40 | 0,75 | 75 | 0.30 | 0.822 | 0.572 |
| | 3 | 3.60 | 1.38 | 83 | 4.04 | 1.60 | 73 | 0.22 | 0.823 | 0.553 |
| | 4 | 3.77 | 1.25 | 82 | 4.43 | 1.02 | 70 | 0.33 | 0.821 | 0.525 |
| | 5 | 3.77 | 1.33 | 80 | 4.34 | 1.57 | 64 | 0.29 | 0.818 | 0.521 |
| | 6 | 4.10 | 1.55 | 72 | 4.60 | 1.65 | 60 | 0.25 | 0.819 | 0.513 |
| | 7 | 4.05 | 1.56 | 71 | 4.46 | 1.91 | 58 | 0.21 | 0.815 | 0.503 |
| Comparative Examples | 1 | 4.50 | 1.19 | 64 | 4.80 | 1.12 | 54 | 0.15 | 0.813 | 0.430 |
| | 2 | - | - | - | 5.00 | 2.19 | 48 | - | 0.813 | 0.352 |
| | 3 | - | - | - | 4.60 | 2.52 | 53 | - | 0.813 | 0.432 |

As shown in Fig. 4, compared to Comparative Examples 1 to 3, Examples 1 to 7 showed excellent power generation performance. As is clear from Table 1 and Figs. 5 and 6, Examples 1 to 7 showed high power generation performance especially in a high current density range (2.6 A/cm$^2$).

As shown in Table 1 and Fig. 5, in the high current density range (2.6 A/cm$^2$), high voltage is obtained in the case where the frequency of the Pt/Pd core-shell catalysts is 71% or more, especially 73% or more, more especially 75% or more, most especially 84% or more.

As shown in Table 1 and Fig. 6, in a low current density range (0.2 A/cm$^2$), high voltage is obtained in the case where the frequency of the Pt/Pd core-shell catalysts is 58% or more, especially 60% or more, more especially 70% or more, most especially 84% or more.

As shown in Table 1 and Figs. 5, 7 and 8, in the high current density range (2.6 A/cm$^2$), when the frequency of the Pt/Pd core-shell catalysts is 71% or more, high voltage can be obtained in the case where the average particle size of the Pt/Pd core-shell catalysts is 4.40 nm or less, especially 4.10 nm or less, more especially 3.90 nm. Also in the high current density range (2.6 A/cm$^2$), when the frequency of the Pt/Pd core-shell catalysts is 71% or more, high voltage can be obtained in the case where the standard deviation of the Pt/Pd core-shell catalysts is 1.60 nm or less, especially 1.10 nm or less, more especially 0.80 nm or less.

In addition, by the present invention, it has been confirmed that the Pt-containing shells which have an average thickness of 0.21 to 0.33 nm can be formed.

## Claims

1. Core-shell catalysts comprising a core containing palladium and a shell containing platinum and covering the core, wherein, in a number-based particle size frequency distribution, an average particle size is 4.70 nm or less; a standard deviation is 2.00 nm or less; and a frequency of a particle size of 5.00 nm or less is 55% or more.

2. The core-shell catalysts according to claim 1, wherein the frequency is 71% or more.

3. The core-shell catalysts according to claim 2, wherein the average particle size is 4.40 nm or less.

4. The core-shell catalysts according to claim 2 or 3, wherein the standard deviation is 1.60 nm or less.

5. The core-shell catalysts according to any one of claims 1 to 4, wherein an average thickness of the shells is 0.20 to 0.35 nm.

6. A method for producing the core-shell catalysts defined by claim 1, wherein a platinum-containing shell is deposited on a surface of a palladium-containing particle in which, in a number-based particle size frequency distribution, an average particle size is 4.40 nm or less; a standard deviation is 2.00 nm or less; and a frequency of a particle size of 5.00 nm or less is 65% or more.

7. The method for producing the core-shell catalysts defined by claim 6, wherein an average thickness of the platinum-containing shells is 0.20 to 0.35 nm.

Fig. 1

Pt shell is formed preferentially on fine Pd Core of 5 nm or less.

Pt shell is not easily formed on coarse Pd core of 5 nm or more.

1 ML Line

Core-shell particle size[nm]

Fig. 2

TS1

E1

Particle size (small)

TS2

E2

Equivalent to 1 ML

TS3

E3

Particle size (large)

ΔE

Equivalent to 1 ML

1 ML or more

E1(E2) < E3

Equivalent to 1 ML

G (free energy)

Reaction coordinate

Fig. 3

Fig. 4

Fig. 5

Fig. 6

Fig. 7

Fig. 8

## INTERNATIONAL SEARCH REPORT

| | International application No. |
|---|---|
| | PCT/JP2014/068057 |

**A. CLASSIFICATION OF SUBJECT MATTER**
*B01J23/44*(2006.01)i, *B01J35/02*(2006.01)i, *B01J37/02*(2006.01)i, *H01M4/86*(2006.01)i, *H01M4/88*(2006.01)i, *H01M4/92*(2006.01)n, *H01M8/10*(2006.01)n

According to International Patent Classification (IPC) or to both national classification and IPC

**B. FIELDS SEARCHED**

Minimum documentation searched (classification system followed by classification symbols)
B01J23/44, B01J35/02, B01J37/02, H01M4/86, H01M4/88, H01M4/92, H01M8/10

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X | Ryotaro SAKAI et al., "PEFC-yo Pd Core-Pt Shell Nano Ryushi Tanji Carbon Black Shokubai no Sanso Kangen Kassei to Taikyusei", Dai 52 Kai Abstracts, Battery Symposium in Japan, 17 October 2011 (17.10.2011), page 370 | 1-7 |
| X | Ryotaro SAKAI et al., Activity and Durability of Pd Core/Pt Shell-Loaded Carbon Black as the Cathode Catalyst in PEFC, ECS Transactions, 2011, vol.41 no.1, pp.2211-2218 | 1-7 |
| X | JP 2012-102345 A (Osaka Prefecture University), 31 May 2012 (31.05.2012), claims; paragraphs [0026], [0033] to [0045]; examples 4, 5; table 1; fig. 1 (Family: none) | 1-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 September, 2014 (26.09.14) | 07 October, 2014 (07.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/068057

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-192334 A  (Toyota Motor Corp.), 11 October 2012 (11.10.2012), claims; examples; comparative examples; fig. 3, 4 (Family: none) | 1-7 |
| A | JP 2011-212666 A  (the Doshisha), 27 October 2011 (27.10.2011), claims; examples & WO 2011/115012 A1 | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7691780 B
- JP 2012041581 A
- JP 2011072981 A
- JP 2005515063 A